# EUROPÄISCHE PATENTANMELDUNG

(11) **EP 1 130 605 A1**
(43) Veröffentlichungstag der Anmeldung: **05.09.2001**
(21) Anmeldenummer: 00113561.5
(22) Anmeldetag: 27.06.2000
(51) Int. Cl.: H01B 19/00, H01B 17/32

(54) **Verfahren zur Herstellung eines Hochspannungsverbundisolators, Hochspannungsisolator sowie Kunststoff zur Verwendung in dem Verfahren, und Verfahren zur Herstellung eines nicht-zylindrischen Bauteils**

(30) Priorität: 01.03.2000 CH 4022000
(71) Anmelder: Wermelinger AG, 6017 Ruswil (CH)
(72) Erfinder: Wermelinger, Anton, 6017 Ruswil (CH)
(74) Vertreter: Lippich, Wolfgang, Dipl.-Pys., Dr.rer.nat.

(57) **Zusammenfassung**

Die Erfindung beschreibt ein Verfahren zur Herstellung eines Hochspannungsisolators mit einem langgestreckten zentralen Voll- oder Hohlkörper (1), einem Mantel aus Kunststoff (6) und einem oder mehreren Schirmen (3) aus Kunststoff mit den folgenden Schritten:
- der Mantel (6) aus Kunststoff wird durch Giessen oder Extrudieren auf den Voll- oder Hohlkörper aufgebracht;
- die Schirme (3) aus Kunststoff werden geformt;
wobei der Kunststoff des Mantels (6) und/oder der Kunststoff der Schirme (3) teilweise vernetzt wird bzw. werden und gegebenenfalls der nicht teilweise vernetzte Kunststoff des Mantels (6) oder der Schirme (3) im wesentlichen vollständig vernetzt wird,
- die Schirme (3) werden auf einem vorgesehenen Platz auf dem Mantel (6) angeordnet; und
- das so gebildete Hochspannungsisolator-Vorprodukt wird vollständig vernetzt.

Weiter sind so erhältliche Isolatoren, ein Kunststoff zur Verwendung in dem Verfahren und ein allgemeines Verfahren, das die Prinzipien des oben beschrieben Verfahrens verwendet, beschrieben.

## Beschreibung

Die vorliegende Erfindung betrifft ein Verfahren zur Herstellung eines Hochspannungsverbundisolators, einen durch diese Verfahren erhältlichen Hochspannungsverbundisolator und einen Kunststoff, der in dem Verfahren verwendet wird. Weiter betrifft die Erfindung ein entsprechendes Verfahren zur Herstellung eines nicht-zylindrischen Bauteils.

Der Begriff Hochspannung wird im Zusammenhang mit der Erfindung weit verstanden und bezieht sich auf Spannungen von mehr als 1000 Volt, wodurch er neben dem Hochspannungsbereich in engem Sinne auch den Mittelspannungsbereich umfasst.

Hochspannungsisolatoren sind mulitfunktionale Bauteile und dienen vorwiegend der elektrischen Isolierung im Hinblick auf Kriechstromstrecke, Durchschlagfestigkeit und Lichtbogenbeständigkeit. Mechanisch betrachtet übernehmen sie Zugkräfte, Druckkräfte, Biegung sowie auch Stützfunktionen, beispielsweise bei Hohlisolatoren für Schalter.

Im Stand der Technik sind Hochspannungskeramik-, -giessharz- und -verbundisolatoren bekannt, wobei sich die letztgenannten mehr und mehr durchsetzen. Diese weisen typischerweise einen Verbund aus einem glasfaserverstärkten zylindrischen Stab (Vollkörper) oder Rohr (Hohlkörper) in ihrem Zentrum und einer Umkleidung aus Kunststoff, insbesondere Silikonkautschuk, auf.

Die Umkleidung ihrerseits setzt sich in der Regel aus einem den Voll- oder Hohlkörper überziehenden Mantel sowie schuppenartig von diesem abstehenden Schirmen zusammen, welche dazu dienen, Regenwasser abzuweisen und den sog. Kriechweg, also die für den Kriechstrom kürzeste Strecke zwischen den beiden Enden des Stabes oder Rohrs, zu verlängern. Am Voll- oder Hohlkörper sind anwenderspezifische Endarmaturen befestigt. Die Kombination von Voll- oder Hohlkörper und Kunststoffmantel wird im folgenden einfachheitshalber "Kern" genannt.

Verbundisolatoren mit Kunststoff-, insbesondere Silikonumkleidungen werden insbesondere wegen zwei Eigenschaften bevorzugt: Erstens ist die Kunststoff-, insbesondere Silikonumkleidung sehr hydrophob, d.h. die Wasserabweisung der meist im Freien benutzten Isolatoren ist hoch, was eine Schmutzabweisung und damit geringe Kriechstromverluste begünstigt. Zweitens ist ihre Bauweise leicht, was die Montage erleichtert.

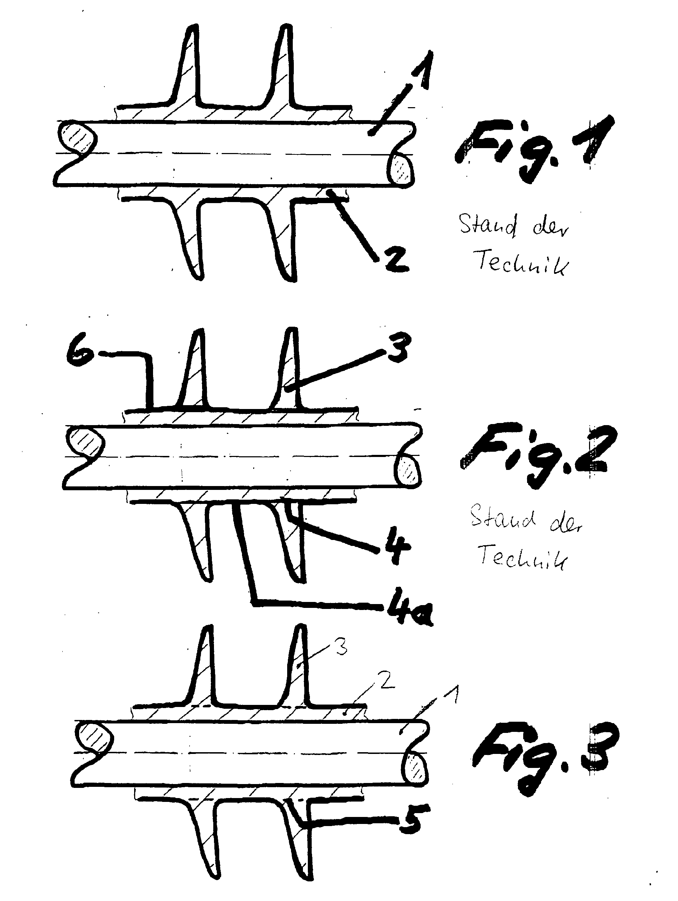

In der Praxis werden prinzipiell zwei Verfahren zur Herstellung von Verbundisolatoren verwendet:
a) die sogenannte Ein-Verguss-Umhüllung (siehe Figur 1). Bei diesem Verfahren werden der Mantel und die Schirme (die Umkleidung) 2 in einem Arbeitsgang mit einer in Längsrichtung teilbaren Gußform auf einen Voll- oder Hohlkörper 1 gegossen. Nachteilig ist dabei aber die relativ niedrige Flexibilität bei der Herstellung unterschiedlicher Isolatorformen. Außerdem können mit diesem Verfahren keine Hinterschneidungen, wie z.B. Rillen an den Schirmen, gegossen werden, wenn nicht mehrteilige Formen verwendet werden, die jedoch den Herstellungsaufwand erheblich erhöhen;
b) ein mehrstufiges Herstellungsverfahren (siehe Figur 2). Darin wird ein Mantel 6 auf den Voll- oder Hohlkörper gegossen oder extrudiert, getrennt davon werden Schirme 3 vorgefertigt, in der Regel durch ein Spritzguss- oder Pressverfahren, und diese werden dann über den Kern gezogen und mit einem Klebstoff auf demselben befestigt.

Das Verfahren b) gestattet eine wesentlich flexiblere Herstellung als das Verfahren a), ist aber noch nicht als optimal anzusehen. Die Klebfugen 4 zwischen Schirm und Kern sind nachweislich elektrisch erodierende Problemstellen, ebenfalls eventuell verbleibender Klebstofffilm 4a auf dem Kern zwischen den Schirmen. Weiter ist es insofern unökonomisch, als der Klebstoff in speziellen Arbeitsgängen aufgetragen werden muß und die überschüssigen Rückstände nach dem Setzen der Schirme aus den erwähnten elektrischen Gründen manuell sauber entfernt werden müssen.

Die Aufgabe der Erfindung besteht demgemäss darin, ein flexibles Verfahren zur Herstellung von Hochspannungsverbundisolatoren bereitzustellen , welches das Erfordernis des Verklebens von Mantel und Schirm vermeidet. Dazu gehört auch die Bereitstellung eines zugehörigen Produkts, eines entsprechenden Werkstoffes sowie eines allgemeinen Verfahrens.

Diese Aufgabe wird durch das Verfahren des Anspruches 1, den Hochspannungsisolator des Anspruchs 17, den Kunststoff des Anspruchs 18 und das Verfahren des Anspruchs 29 gelöst.

In den Unteransprüchen sind Konkretisierungen und vorteilhafte Ausgestaltungen angegeben.

### Kurze Beschreibung der Zeichnungen:

Figur 1 ist eine Querschnittansicht eines Teils eines Hochspannungsverbundisolators nach dem Stand der Technik, dessen Umkleidung einstückig hergestellt ist.

Figur 2 ist eine Querschnittsansicht eines Teils eines Hochspannungs-Verbundisolators nach dem Stand der Technik mit auf dem Mantel aufgeklebtem Schirm und Klebfuge.

Figur 3 ist eine schematische Querschnittsansicht eines Teils eines Ausführungsbeispiels eines erfindungsgemäßen Hochspannungs-Verbundisolators mit zweistückig gefertigter Umkleidung ohne Klebfuge.

Im folgenden werden Ausführungsbeispiele anhand von Fig. 3 näher beschrieben.

Der Verbundisolator weist einen elektrisch isolierenden, langgestreckten zentralen Körper 1 auf, der zumindest Zugkräfte aufnehmen kann und z.B. die Form eines Stabes oder Rohres hat. Er ist beispielsweise aus glasfaserverstärktem Kunststoff gefertigt. Auf den Körper 1 ist ein dünner Mantel 2 z.B. aus Silikonkautschuk aufextrudiert. Auf den Mantel 2 sind Schirme 3 aufgesetzt, die in Radialrichtung oder einem spitzen Winkel hierzu auskragen. Diese sind z.B. im Spritzguss- oder Pressverfahren vorproduziert. Der Mantel 2 und die Schirme 3 sind an den längs des Umfangs verlaufenden Berührflächen 5 chemisch miteinander verbunden, wie unten noch näher erläutert wird. Die Schirme 3 können zur Verlängerung des Kriechweges auf einer oder beiden Seiten Verrippungen oder Rillen aufweisen.

Durch die Verbindung von bündig, d.h. ohne Zwischenraum aufeinanderliegenden Kunststoffmantel und Kunststoffschirmen des Isolators, von denen mindestens einer nur teilweise vernetzt (anvulkanisiert) ist und gegebenenfalls der andere im wesentlichen vollständig vernetzt ist, mittels vollständiger Vernetzung (Vulkanisation), wie in Anspruch 1 beschrieben, sind sehr stabile kovalente chemische Bindungen zwischen Mantel und Schirm erzielbar. Dies gilt für den Fall der teilweisen Vernetzung beider Umkleidungskomponenten ganz offensichtlich. Aber auch bei im wesentlichen vollständiger Vernetzung einer der Umkleidungskomponenten ist eine chemische kovalente Verbindung zwischen anvulkanisierter und durchvulkanisierter Umkleidungkomponente möglich, da auch bei einem durchvulkanisierten Kunststoff in der Regel in der Nähe der Oberfläche noch genügend reaktive Gruppen vorhanden sind, um unter der Einwirkung des verbleibenden Vernetzungskatalysators des anvulkanisierten Kunststoffs mit diesem stabile chemische Bindungen einzugehen, wie dies beispielsweise dem Fachmann auf dem Gebiet der Kunststoffklebstoffe wohlbekannt ist. In beiden Fällen wird also eine in physikalischer Hinsicht homogene Umkleidung ohne elektrische Fugen gebildet.

Ein bevorzugter Kunststoff zur Verwendung in dem erfindungsgemäßen Verfahren ist Silikonkautschuk. Deshalb wird die anschließende Beschreibung des Verfahrens vorwiegend an Hand von Silikonkautschuk vorgenommen. Es versteht sich aber, dass die Erfindung nicht auf Silikonkautschuk beschränkt ist, sondern alle isolierenden Kunststoffe einschliesst, z.B. Polyethylen, Ethylen-Ethylacrylat-Copolymer, Ethylen-Vinylacetat-Copolymer, Ethylen-Propylen-Copolymer (EPM), Ethylen-Propylen-Dien-Terpolymer (EPDM), chlorsulfoniertes Polyethylen, Polypropylen, Butylacrylat-Glycidylmethacrylat-Copolymer, Polybuten, Butylkautschuke und ionomere Polymere.

Prinzipiell kann die Kunststoffvernetzung auf jegliche bekannte Weise, einschliesslich Strahlungsvernetzung, durchgeführt werden. Bevorzugt wird sie aber mittels eines Katalysators vorgenommen.

Die teilweise Kunststoffvernetzung des Verfahrens der Erfindung kann ebenfalls mittels dosierter Strahlung oder mittels eines einzigen Vernetzungskatalysator oder, bei durch Additionsreaktion vernetzenden Silikonkautschuken, mittels eines einzigen Inhibitors durchgeführt werden, indem Reaktionszeit und temperatur geeignet gewählt werden. Bevorzugt werden jedoch mindestens zwei Vernetzungskatalysatoren mit verschiedenen Reaktionstemperaturen verwendet. In diesem Fall wird der Katalysator mit der niedrigsten Reaktionstemperatur bevorzugt in einer Menge eingesetzt, die nicht ausreicht, um den Kunststoff vollständig zu vernetzen; und der oder die Katalysator(en) mit höherer Reaktionstemperatur wird bzw. werden bevorzugt nur in einer solchen Menge eingesetzt, die gerade ausreicht, um in Kombination mit dem Katalysator mit der niedrigsten Reaktionstemperatur den Kunststoff vollständig zu vernetzen. Die speziellen Mengen dieser Vernetzungskatalysatoren hängen von der Art des Katalysators und des Kunststoffs ab und können durch Routineversuche bestimmt werden. Die teilweise vernetzte oder anvulkanisierte Umkleidungskomponente sollte eine gute Handhabung ermöglichen und Formstabilität aufweisen. Die Menge des oder der bei höherer Temperatur reagierenden Katalysators bzw. Katalysatoren kann aus der Kenntnis des bei niedrigerer Temperatur reagierenden Katalysators berechnet oder durch einfache Versuche ermittelt werden. Im Fall von durch Additionsreaktion vernetzendem Silikonkautschuk werden mindestens zwei verschiedene, die Vernetzungsreaktion bis zu verschiedenen Temperaturen hemmende Vernetzungsinhibitoren eingesetzt.

Bei radikalisch vernetzendem Silikonkautschuk handelt es sich bevorzugt um Poly(dimethyl-methylvinly-siloxan), insbesondere das von der Wacker Chemie unter der eingetragenen Marke "Powersil 310" vertriebenene, das eine Poly(dimethylmethylvinyl-siloxan) mit hochdisperser Kieselsäure als verstärkendem Füllstoff und Aluminium-Trihydrat zur Erhöhung der Kriechstromfestigkeit ist.

Für eine Teilvernetzung (Anvulkanisation) werden dem oben beschriebenen Silikonkautschuk bevorzugt mindestens zwei bei verschiedenen Temperaturen zerfallende Radikal-Katalysatoren zugesetzt. Bevorzugt werden Peroxid-Katalysatoren, insbesondere Bis(2,4-dichlorbenzoylperoxid) (50%ig in Silkonöl, "Vernetzer E" der Wacker Chemie), das bei 90°C zu reagieren beginnt, und 2,5-Bis(ter.-butylperoxy)-2,5-dimethylhexan (45%ig in Silikonkautschuk; "Vernetzer C6" der Wacker Chemie), das bei 170-190°C reagiert.

Die speziell verwendeten Mengen der bei unterschiedlichen Temperaturen reagierenden Radikal-Katalysatoren hängen von deren Natur und vom verwendeten Kautschuk ab und können vom Fachmann leicht durch einfache Versuche unter Berücksichtigung der oben gegebenen allgemeinen Beschreibung ermittelt werden. Für eine Anvulkanisation wird z.B. der Vernetzer E in einer Menge von weniger als etwa 1,5 Gew.%, bezogen auf Silikonkautschuk, eingesetzt, und für die anschliessende Durchvulkanisation wird z.B. der Vernetzer C6 in einer Menge von weniger als etwa 0,6 Gew.%, bezogen auf Silikonkautschuk, eingesetzt.

Bei dem durch Additionsreaktion vernetzenden Silikonkautschuk handelt es sich bevorzugt um Poly(dimethyl-vinylmethylsiloxan), dem bevorzugt ein Hydrogensiloxan, z.B. Poly(dimethyl-hydrogenmethyl-siloxan), beigemischt ist. Die bevorzugten Katalysatoren sind Platin-Katalysatoren. Um eine teilweise Vernetzung durchzuführen, werden dem Silkonkautschuk mindestens ein Inhibitor, bevorzugt mindestens zwei Inhibitoren für die Additionsreaktion zugesetzt.

Die Menge der Inhibitoren steuert die sogenannte Anspringtemperatur, bei der bei gegebenem Inhibitor die Reaktion dann tatsächlich eingeleitet wird. Der Inhibitor, der für die niedrigste Anspringtemperatur sorgen soll, wird bevorzugt in einer Menge eingesetzt, die eine Anspringtemperatur bewirkt, die niedrig genug ist, dass der Silikonkautschuk nicht vollständig vernetzt wird; und der oder die Inhibitor(en), die für die höhere Anspringtemperatur sorgen sollen, werden in einer solchen Menge eingesetzt, dass die vollständige Vernetzung bei einer Temperatur im gewünschten Temperaturabstand erfolgt. Die speziellen Mengen dieser Anspringkatslysatoren hängen von der Art des Inhibitors und des Silikonkautschuks ab und können, analog wie oben bei den Vernetzungskatalysatoren beschrieben, vom Fachmann durch Routineversuche bestimmt werden.

Beispiele für Inhibitoren sind Vinyl-methyl-siloxan (1:3) (unter der Bezeichnung PT 67 von der Wacker Chemie erhältlich) (übliche Einsatzmenge bei alleiniger Verwendung 0,5 bis 0,75 Gew.%, bezogen auf Silikonkautschuk) und eine 5%ige Lösung von Ethinylcyclohexanol in Silikonöl (unter der Bezeichnungn PT88 von der Wacker Chemie erhältlich) (übliche Einsatzmenge bei alleiniger Verwendung 0,25 bis 0,5 Gew.%, bezogen auf Silikonkautschuk).

Falls eine der Umkleidungskomponenten im erfindungsgemäßen Verfahren bereits zu Beginn durchvulkanisiert wird, kann jeder für das spezielle Herstellungsverfahren (z.B. Giessen, Extrudieren, Spritzgiessen oder Pressformen) geeignete Katalysator verwendet werden. Diese Katalysatoren sind dem Fachmann wohlbekannt und die oben genannten Katalysatoren E, C6 und Platinkatalysatoren fallen darunter.

Das beanspruchte Verfahren ist nicht etwa nur für die genannten Hochspannungsverbundisolatoren geeignet, sondern kann vorteilhaft für alle in ähnlicher Art geformte Körper Anwendung finden. Schließlich richtet sich die Erfindung daher gemäss Anspruch 29 auf ein Verfahren zur Herstellung nicht-zylindrischer Bauteile, die einen langgestreckten Voll- oder Hohlkörper, einen (vorzugsweise zylindrische) Kunststoffmantel und mehrere Kunststoffverrippungsglieder aufweisen. Bei diesen Bauteilen kann es sich beispielsweise um Schläuche oder Rohre handeln, an deren Aussenseite sich z.B. Verstärkungs-, Abstützungs- oder Befestigungselemente befinden. Der Verfahrensablauf entspricht dem des vorbeschriebenen, erfindungsgemässen Verfahrens zur Herstellung eines Hochspannungsverbundisolators und umfaßt vorteilhaft auch dessen Ausgestaltungen.

In einem konkreten Beispiel für die Herstellung eines Hochspannungsverbundisolators wird ein Mantel aus dem oben beschriebenen Silikonkautschuk "Powersil 310" mit einem einzigen Peroxid-Vernetzer auf einen Stab extrudiert und weitgehend vernetzt. Schirme mit einer nicht zur vollständigen Vulkanisation ausreichenden Menge des oben beschriebenen Vernetzers E und einer zur Durchvulkanisation benötigten Menge des oben beschriebenen Vernetzers C6 werden bei 140°C gespritzt und dabei anvulkanisiert. Der Kern wird mit bündig aufliegenden Schirmen bestückt, und es wird eine Durchvulkanisation in einem Vulkanisationsofen bei 170°C vorgenommen. Es resultiert eine stabile Verbindung zwischen Mantel und Schirmen.

## Patentansprüche

1. Verfahren zur Herstellung eines Hochspannungsisolators mit einem langgestreckten zentralen Voll- oder Hohlkörper (1), einem Mantel aus Kunststoff (6) und einem oder mehreren Schirmen (3) aus Kunststoff mit den folgenden Schritten:
- der Mantel (6) aus Kunststoff wird durch Giessen oder Extrudieren auf den Voll- oder Hohlkörper aufgebracht;
- die Schirme (3) aus Kunststoff werden geformt;
wobei der Kunststoff des Mantels (6) und/oder der Kunststoff der Schirme (3) teilweise vernetzt wird bzw. werden und gegebenenfalls der nicht teilweise vernetzte Kunststoff des Mantels (6) oder der Schirme (3) im wesentlichen vollständig vernetzt wird,
- die Schirme (3) werden auf einem vorgesehenen Platz auf dem Mantel (6) angeordnet; und
- das so gebildete Hochspannungsisolator-Vorprodukt wird vollständig vernetzt.

2. Verfahren nach Anspruch 1, bei dem sowohl der Kunststoffe des Mantels als auch der Kunststoff der Schirme Silikonkautschuk umfassen.

3. Verfahren nach Anspruch 1 oder 2, bei dem der Kunststoffe des Mantels und der Kunststoff der Schirme identisch sind.

4. Verfahren nach einem der Ansprüche 1 bis 3, bei dem sowohl der Kunststoff des Mantels als auch der Kunststoff der Schirme mindestens einen Vernetzungskatalysator enthalten.

5. Verfahren nach einem der Ansprüche 1 bis 4, bei dem der teilweise zu vernetzende Kunststoff mindestens zwei Vernetzungskatalysatoren enthält, die bei verschiedenen Temperaturen reagieren.

6. Verfahren nach Anspruch 5, bei dem ein bei einer niedrigsten Temperatur reagierender Vernetzungskatalysator in einer Menge eingesetzt wird, die nicht ausreicht, um den Kunststoff vollständig zu vernetzen.

7. Verfahren nach Anspruch 6, bei dem ein oder mehrere bei einer höheren Temperatur reagierende Vernetzungskatalysatoren in einer Menge eingesetzt werden, die gerade ausreicht, um die auf die teilweise Vernetzung folgende vollständige Vernetzung zu bewirken.

8. Verfahren nach einem der Ansprüche 2 bis 7, bei der Kunststoff des Mantels und/oder der Kunststoff der Schirme einen durch Radikal-Katalyse vernetzenden Kunststoff, insbesondere Poly(dimethyl-methylvinyl-siloxan), umfassen, der mindestens einen, bevorzugt zwei, Radikal-Katalysatoren, insbesondere Peroxid-Katalysatoren, enthält.

9. Verfahren nach einem der Ansprüche 5 bis 8, bei dem ein Radikal-Katalysator mit einer niedrigeren Zerfallstemperatur Bis(2,4-dichlorbenzoyl)peroxid ist und ein Radikal-Katalysator mit einer höheren Zerfallstemperatur 2,5-Bis(tert.-butylperoxy)-2,5-dimethylhexan ist.

10. Verfahren nach einem der Ansprüche 1 bis 4, bei dem ein oder beide Kunststoffe einen durch Additionsreaktion vernetzenden Kunststoff umfassen, der mindestens einen Additions-Katalysator, bevorzugt Platin-Katalysator, und mindestens einen Inhibitor für die Additionsreaktion enthält.

11. Verfahren nach Anspruch 10, bei dem der durch Additionsreaktion vernetzende Kunststoff (Poly(dimethyl-methylvinyl-siloxan) umfasst.

12. Verfahren nach Anspruch 11, bei dem der durch Additionsreaktion vernetzende Kunststoff weiter ein Hydrogensiloxan, insbesondere Poly(dimethyl-hydrogenmethyl-siloxan) umfasst.

13. Verfahren nach einem der Ansprüche 10 bis 12, bei dem der Kunststoff mindestens zwei verschiedene, eine Additionsreaktion bis zu verschiedenen Temperaturen (Anspringtemperaturen) hemmende Inhibitoren enthält.

14. Verfahren nach Anspruch 13, bei dem die mindestens zwei Inhibitoren Vinyl-methyl-siloxan (1:3) und Ethinylcyclohexanol umfassen.

15. Verfahren nach Anspruch 13, oder 14, bei dem ein Inhibitor mit der niedrigsten Anspringtemperatur in einer Menge zugesetzt ist, die nicht ausreicht, um den Kunststoff vollständig zu vernetzen.

16. Verfahren nach einem der Ansprüche 1 bis 15, bei dem Kunststoffabdichtungen für am Ende des zentralen Voll- oder Hohlkörpers angebrachte Armaturen auf gleich Weise wie die Schirme aufgebracht werden.

17. Hochspannungsisolator mit einem langgestreckten zentralen Voll- oder Hohlkörper (1), einem Mantel aus Kunststoff (6) und einem oder mehreren Schirmen (3), erhältlich nach dem Verfahren nach einem der Ansprüche 1 bis 16.

18. Kunststoff zur Verwendung in dem Verfahren nach einem der Ansprüche 1 bis 16, der mindestens zwei bei verschiedenen Temperaturen reagierende Vernetzungskatalysatoren oder mindestens zwei verschiedene, eine Additionsreaktion bis zu verschiedenen Temperaturen hemmende Inhibitoren enthält.

19. Kunststoff nach Anspruch 18, der einen Silikonkautschuk umfaßt.

20. Kunststoff nach Anspruch 18 oder 19, der radikalisch vernetzbar ist und bei dem die mindestens zwei Vernetzungskatalysatoren Radikal-Katalysatoren, insbesondere Peroxid-Katalysatoren, sind.

21. Kunststoff nach Anspruch 20, der Poly(dimethylmethylvinyl-siloxan) enthält.

22. Kunststoff nach Anspruch 20 oder 21, bei dem ein Radikal-Katalysator mit einer niedrigeren Reaktionstemperatur Bis(2,4-dichlorbenzoyl)peroxid ist und ein Radikal-Katalysator mit einer höheren Reaktionstemperatur 2,5-Bis(tert.-butylperoxy)-2,5-dimethylhexan ist.

23. Kunststoff nach Anspruch 18 oder 19, der durch Additionsreaktion vernetzbar ist und mindestens einen Additions-Katalysator, insbesondere Platin-Katalysator, aufweist.

24. Kunststoff nach Anspruch 23, der Poly(dimethylvinylmethyl-siloxan) umfasst.

25. Kunststoff nach Anspruch 24, der weiter ein Hydrogenmethylsiloxan, insbesondere Poly(dimethyl-hydrogenmethylsiloxan) umfasst.

26. Kunststoff nach einem der Ansprüche 23 bis 25, bei dem die mindestens zwei Inhibitoren für die Additionsreaktion Vinyl-methyl-siloxan (1:3) und Ethinylcyclohexanol umfassen.

27. Kunststoff nach einem der Ansprüche 18 bis 26, bei dem ein Vernetzungskatalysator mit niedrigster Reaktionstemperatur oder ein Inhibitor mit der niedrigsten Anspringtemperatur in einer Menge zugesetzt ist, die nicht ausreicht, um den Kunststoff vollständig zu vernetzen.

28. Kunststoff nach einem der Ansprüche 18 bis 22, bei dem ein oder mehrere Vernetzungskatalysatoren mit höherer Reaktionstemperatur in einer Menge zugesetzt sind, die gerade ausreicht, um den Kunststoff zusammen mit dem Vernetzungskatalysator mit niedrigster Reaktionstemperatur vollständig zu vernetzen.

29. Verfahren zur Herstellung eines nicht-zylindrischen Bauteils mit einem langgestreckten zentralen Voll- oder Hohlkörper, einem Mantel aus Kunststoff und einem oder mehreren Verrippungsgliedern aus Kunststoff mit den folgenden Schritten:
- der Mantel aus Kunststoff wird durch Giessen oder Extrudieren auf den Voll- oder Hohlkörper aufgebracht;
- die Verrippungsglieder aus Kunststoff werden geformt;
wobei der Kunststoff des Mantels und/oder der Kunststoff der Verrippungsglieder teilweise vernetzt wird bzw. werden und gegebenenfalls der nicht teilweise vernetzte Kunststoff des Mantel oder der Verrippungsglieder im wesentlichen vollständig vernetzt wird,
- die Verrippungsglieder werden auf einem vorgesehenen Platz auf dem Mantel angeordnet; und
- die so gebildete Zusammenstellung wird vollständig vernetzt.

30. Verfahren nach Anspruch 29, mit einem oder mehreren Merkmalen der Ansprüche 2 bis 15.
